# EUROPÄISCHE PATENTSCHRIFT

(11) **EP 0 797 633 B1**
(45) Veröffentlichungstag und Bekanntmachung des Hinweises auf die Patenterteilung: **01.09.1999**
(21) Anmeldenummer: 95942670.1
(22) Anmeldetag: 15.12.1995
(51) Int. Cl.: C09D 5/02, C09D 175/04, C09D 133/06, C09D 151/08

(54) **WÄSSRIGE ÜBERZUGSMITTEL UND DEREN VERWENDUNG BEI VERFAHREN ZUR EINSCHICHT- UND MEHRSCHICHTLACKIERUNG**
AQUEOUS COATING MATERIAL AND ITS USE IN METHODS FOR SINGLE AND MULTI-COAT PAINTING
PRODUITS D'ENDUCTION AQUEUX ET LEUR EMPLOI DANS DES PROCEDES DE MISE EN PEINTURE A UNE OU PLUSIEURS COUCHES

(30) Priorität: 17.12.1994 DE 4445200
(43) Veröffentlichungstag der Anmeldung: 01.10.1997
(73) Patentinhaber: Herberts Gesellschaft mit beschränkter Haftung, 42285 Wuppertal (DE)
(72) Erfinder: HEUWINKEL, Heike, D-45549 Sprockhövel (DE); LENHARD, Werner, D-42289 Wuppertal (DE); PATZSCHKE, Hans-Peter, D-42279 Wuppertal (DE); VOGT-BIRNBRICH, Bettina, D-42719 Solingen (DE)
(74) Vertreter: Türk, Gille, Hrabal
(86) Internationale Anmeldenummer: EP9504967
(87) Internationale Veröffentlichungsnummer: WO9618693

(56) Entgegenhaltungen:
- EP-A- 0 459 634
- EP-A- 0 626 432
- EP-A- 0 684 286
- DE-A- 4 112 327
- FR-A- 2 243 223
- US-A- 4 197 224

## Beschreibung

Die Erfindung betrifft wäßrige Überzugsmittel, die auf Basis von ionischen Gruppen enthaltenden wasserverdünnbaren Bindemittelmischungen hergestellt werden. Sie sind zur Herstellung von Einschicht- und Mehrschichtlackierungen, insbesondere auf dem Kraftfahrzeugsektor geeignet.

Beim Pigmentieren von wasserverdünnbaren Harzen, insbesondere Hydrobasecoats, treten im allgemeinen dadurch Probleme auf, daß die Pigmente agglomerieren oder sedimentieren. Zur Herstellung von stabilen wasserverdünnbaren Lacken ist es notwendig, die Pigmente gut zu benetzen und auf eine geeignete Korngröße zu vermahlen. Diese liegt im allgemeinen unter 10 µm. Bei Einsatz von lösemittelarmen wasserverdünnbaren Dispersionen können durch die dabei einwirkenden Scherkräfte diese wäßrigen Dispersionen zerstört werden. Es ist daher notwendig, in vielen Fällen einen Teil der Bindemittel zur Benetzung der Pigmente oder Additive durch spezielle Bindemittel, sogenannte Pastenharze, zu ersetzen, in denen die Pigmente angerieben werden. Diese Pigmentpasten können lösemittelhaltig oder wasserhaltig sein, sie werden anschließend mit dem restlichen wasserverdünnbaren Bindemittel vermischt und bilden so das wäßrige Überzugsmittel, z.B. eine Grundierung, einen Füller oder einen Basislack.

Dabei ist es notwendig, daß die wäßrigen Überzugsmittel lagerstabil sind. Sie dürfen also nicht sedimentieren, noch dürfen sich Bindemittel- bzw. Pigmentagglomerationen bilden, die bei der späteren Applikation das einheitliche glatte Aussehen des Überzugs stören.

Wasserverdünnbare Überzugsmittel für Metallic-Basislacke oder Bindemittel dafür auf anionischer Basis sind beispielsweise in der EP-A-0 260 447, EP-A-0 297 576, DE-A-40 00 889 und der EP-A-0 438 090 beschrieben. Dabei werden als Pastenharze z.B. Anteile des anionischen Basisharzes oder neutrale Melaminharze zum Anreiben von Pigmenten verwendet oder es handelt sich um spezielle Pastenharze, die einreagierte Carboxylgruppen tragen. Nach Neutralisation und Überführen der Bindemittel in die Wasserphase werden die Pigmente angerieben. Mit diesen wäBrigen Pigmentpasten können Überzugsmittel hergestellt werden.

In der DE-A-40 11 633, DE-A-26 06 831 und der EP-A-0 251 772 werden wäßrige Überzugsmittel beschrieben auf Basis von mindestens teilweise neutralisierten kationischen Harzen. Diese können als Elektrotauchlack oder als Wasserbasislack verwendet werden. Dabei werden die Pigmente z.B. in einem nicht-ionischen Netzmittel zusammen mit organischen Lösungsmitteln angerieben. Diese Pigmentpaste wird dann mit einem Bindemittel, das kationische Gruppen trägt, vermischt und anschließend zu einem wäßrigen Überzugsmittel verdünnt. Weiterhin werden auch kationische Pastenharze, z.B. Sulfoniumgruppen enthaltende Epoxidharze, beschrieben, die zum Herstellen der Pigmentpasten dienen, die dann mit kationischen Harzen zu dem kationischen Lackmaterial verarbeitet werden.

Es werden also bisher nur Überzugsmittel mit kationischen oder anionischen Bindemitteln beschrieben, die jeweils Additive oder Pastenharze mit gleichen ionischen Gruppen oder mit nicht-ionischen Gruppen aufweisen.

In der DE-A-38 23 731 werden wäßrige hitzehärtbare Überzugsmittel beschrieben, die mindestens zwei Bindemittel enthalten, die entgegengesetzt geladene ionische Gruppen tragen. Bei diesen Überzugsmitteln ist wesentlich, daß die Bindemittel mit verschieden geladenen ionischen Gruppen bei Lagertemperaturen, d.h. unter der Härtungstemperatur, nicht miteinander mischbar sind. Es liegen also zwei separate Harzphasen vor. Erst unter Härtungsbedingungen, d.h. bei erhöhter Temperatur, vermischen sich die Bindemittel. Die Mengen der Harze sind so zu wählen, daß die Anzahl der verschiedenen ionischen Gruppen in ungefähr gleicher Größenordnung vorliegen.

In der EP-A-0 459 634 werden Bindemittel beschrieben, die gleichzeitig in anionische und in kationische Gruppen überführbare Substituenten tragen. Die anionischen Gruppen werden neutralisiert und das Bindemittel in die Wasserphase überführt. Nach dem Zufügen von Pigmenten und neutralen Vernetzern, werden Überzugsmittel erhalten. Es werden keine Gemische unterschiedlich neutralisierter Harze beschrieben.

In der CA-A-2 017 505 werden Bindemittel zur Papierbeschichtung beschrieben, die durch Emulsionspolymerisation von kationischen Gruppen tragenden Monomeren in einer wäßrigen Lösung eines neutralisierten anionische Gruppen tragenden polymeren Dispergiermittels hergestellt werden. Dabei muß das Dispergiermittel mit einem flüchtigen Amin überneutralisiert werden, um eine stabile Emulsion zu geben. Das Dispergiermittel ist in solchen Mengen vorhanden, daß nach der Papierbeschichtung beim Erwärmen eine Salzbildung erfolgt, wodurch ein trockener Film entsteht.

In der Lackindustrie ist es notwendig, für wasserverdünnbare Bindemittel, die ionische Gruppen enthalten, jeweils eine in der Polarität den Bindemitteln angepaßte Pigmentpaste zu entwickeln, um stabile Überzugsmittel zu erhalten. Das führt zu erheblichen und kostenintensiven Entwicklungsarbeiten.

Aufgabe der Erfindung ist die Bereitstellung wäßriger Überzugsmittel auf der Basis ionischer Lackbindemittel, denen problemlos Pastenharze zugesetzt werden können, wobei die fertigen Überzugsmittel lagerstabil sind und nicht zur Koagulation bzw. Agglomeration neigen. Das applizierte vernetzte Überzugsmittel soll eine gute Beständigkeit gegen Feuchtigkeitsbelastung, eine gute Haftung und Zwischenschichthaftung in Mehrschichtaufbauten aufweisen.

Diese Aufgabe wird durch ein wäßriges Überzugsmittel gelöst, das eine wäßrige Mischung enthält aus
I) 99 - 70 Gew.-% eines Gemisches aus
   A) 50 - 100 Gew.-% eines oder mehrerer Bindemittel, die zumindest teilweise ionische Gruppen tragen,
   B) 0 - 50 Gew.-% eines oder mehrerer Vernetzer für die Bindemittel A), die zumindest teilweise ionische Gruppen tragen können, wobei die vorhandenen ionischen Gruppen die gleiche Ladung wie die der Komponente A) tragen und
II. 1 - 30 Gew.-% eines oder mehrerer Bindemittel (Komponente C) in Form einer wäßrigen Dispersion, wobei die Bindemittel mit den Bindemitteln der Komponente A) sowohl bei der Lagerungstemperatur als auch bei der Härtungstemperatur der Überzugsmittel miteinander mischbar sind und die ionische Gruppen tragen, deren Ladung entgegengesetzt zur Ladung der ionischen Gruppen der Komponente I) ist, und wobei zumindest ein Teil der ionischen Gruppen neutralisiert ist und wobei sich die Gew.-% jeweils auf das Harzfestkörpergewicht beziehen und wobei die Anteile der Komponenten I) und II) so aufeinander abgestimmt sind, daß 0,5 bis 70 % der Anzahl der Ladungen der ionischen Gruppen von I) durch die Ladungen der ionischen Gruppen von II) neutralisiert sind, sowie
III. übliche Lackadditive und/oder Pigmente und/oder Füllstoffe, sowie gegebenenfalls ein oder mehrere lackübliche Lösemittel,
wobei Komponente C) in Form einer Pigmentpaste zugesetzt ist, die 5 bis 65 Gew.-% eines oder mehrerer Pigmente und/oder Füllstoffe zusammen mit 95 bis 35 Gew.-% des Harzes der Komponente C) enthält.

Die Erfindung betrifft auch ein Verfahren zur Herstellung des erfindungsgemäßen Überzugsmittels durch Vermischen der vorstehend definierten Komponenten I, II und m.

Bevorzugt weisen die Komponente I (Summe von Bindemittelkomponente A) und Vernetzerkomponente B)) kationische Gruppen entsprechend einer Aminzahl von 20 bis 200 oder anionische Gruppen entsprechend einer Säurezahl von 5 bis 80 auf und die Komponente C) anionische Gruppen entsprechend einer Säurezahl von 10 bis 90 oder kationische Gruppen entsprechend einer Aminzahl von 10 bis 150.

Die in den erfindungsgemäßen Überzugsmitteln vorhandenen filmbildenden Lackbindemittel A) können anionische oder kationische Basisharze sein. Es handelt sich um bekannte wasserverdünnbare Bindemittel auf Basis von einem oder mehreren Poly(meth)acrylaten, ölfreien oder fettsäuremodifizierten Polyestern, Polyurethanen, Polyurethan-Harnstoffharzen, Epoxidharzestern, Polyamiden und/oder Maleinsäureanhydrid-Fettsäureumsetzungsprodukten, die einreagiert die ionischen Gruppen tragen. Es sind entweder Harze A1) mit kationischen Gruppen möglich, wie beispielsweise mit Gruppen -NH₂, -NHR, -NR₂, -NR₃⁺, -SR₃⁺ oder -PR₄⁺, oder Harze A2) mit anionischen Gruppen, wie beispielsweise -P(OR)₂OH, -SO₃H, -COOH; in den vorstehenden Formeln bedeutet R jeweils einen organischen Rest, insbesondere eine Alkylgruppe, bevorzugt mit 1 bis 6 Kohlenstoffatomen; mehrere Reste R können gleich oder verschieden sein. Die Harze können einzeln oder im Gemisch vorliegen; sie sind selbstvernetzend oder sie können mit zusätzlichen Vernetzern reagieren. Es ist darauf zu achten, daß nur gleichionische Harze zusammen eingesetzt werden.

Kationische Bindemittel A1) sind beispielsweise in der DE-A-15 46 854, DE-A-23 25 177, DE-A-23 57 152 oder insbesondere in der DE-A-40 11 633 beschrieben. Es handelt sich dabei z.B. um basische Gruppen enthaltende Harze aus ethylenisch ungesättigten Monomeren, im Folgenden als Poly(meth)acrylatharze bezeichnet, die durch Lösungs- oder Emulsionspolymerisation hergestellt werden und eine Hydroxylzahl von 0 - 450 und eine zahlenmittlere Molmasse (Mn) von 500 bis 50000, gemessen durch Gelpermeationschromatographie, aufweisen. Die Glasübergangstemperatur liegt bevorzugt bei 50 bis +150°C. Die Aminzahl der Bindemittel liegt bei 20 bis 200 mg KOH/g Festharz, bevorzugt bei 20 bis 150.
Als einsetzbare ethylenisch ungesättigte Monomere für diese Poly(meth)acrylatharze sind praktisch alle radikalisch polymerisierbaren Monomere möglich, wobei dem Fachmann die üblichen Bedingungen für Copolymerisationen geläufig sind, wie sie z.B. durch die Copolymerisationsparameter vorgegeben sind. Bevorzugt wird ein Poly(meth)acrylatharz aus nicht funktionellen (Meth)acrylatmonomeren zusammen mit funktionelle Gruppen tragenden (Meth)acrylatmonomeren, z.B. Aminogruppen, Hydroxylgruppen und/oder Epoxidgruppen, wie z.B. in der DE-A-40 11 633 beschrieben, gegebenenfalls mit weiteren radikalisch copolymerisierbaren Monomeren eingesetzt. Dabei können gegebenenfalls auch radikalisch polymerisierbare Monomere mit mehreren ungesättigten Gruppen anteilsweise eingesetzt werden.

Die Einführung der ionischen Gruppen kann auch durch polymeranaloge Umsetzung geschehen. Beispielsweise wird in der DE-A-34 36 346 ein Verfahren beschrieben, in dem epoxidgruppenhaltige ungesättigte Monomere in das Copolymere einpolymerisiert werden. Über diese Epoxidgruppen können anschließend mit Ammoniak und/oder Monoaminen, mit beliebigen Sulfiden, z.B. aliphatischen, aromatischen oder cyclischen Sulfiden oder mit aliphatischen, aromatischen oder alicyclischen Phosphinen, Aminogruppen, tert. Sulfoniumgruppen oder quarternären Phosphoniumsalzgruppen in das Harz eingeführt werden. Die Amine, Sulfide oder Phosphine werden beispielsweise zusammen mit einer Säure und dem Epoxid umgesetzt.

Ebenso ist es möglich, Oniumgruppen direkt durch Polymerisation von Monomeren einzuführen, die die quartäre Ammoniumgruppe, quartäre Phosphoniumgruppe oder tertiäre Sulfoniumgruppe schon enthalten.

Eine andere bevorzugte Gruppe von basischen Bindemitteln wird aus Polyestern hergestellt. Beispiele hierfür werden ebenfalls in der DE-A-40 11 633 beschrieben. Es handelt sich beispielsweise um Bindemittel, bei denen die Aminogruppe als Aminoalkohol in den Polyester einkondensiert wird oder mit Hilfe einer Polyaddition an die Polymerkette angehängt wird. So wird beispielsweise ein bevorzugt linearer OH-gruppenhaltiger Polyester durch Umsetzung des Polyesters mit Dialkylaminodialkoholen und Diisocyanaten aufgebaut. Gegebenenfalls ist es möglich, die entstehenden Umsetzungsprodukte mit geeigneten Verbindungen, wie z.B. Polyaminen oder Polyolen zu verlängern.

Besonders geeignete Beispiele für Dialkylaminoalkohole sind N,N-Dimethylethanolamin und solche des Typs 2-Dialkylamino-2-ethyl-1,3-propandiol oder 2-(2-Azacycloalkylmethyl)-2-ethylpropandiol, wie z.B. 2-(Dimethylamino-methyl)-2-ethyl-1,3-propandiol, sowie 3-Dimethylaminopropandiol-1,2 und 3-Diethylaminopropandiol-1,2. Weitere Beispiele sind Methyldiethanolamin, Ethylpropandiolamin; mono-, bis--oder polyoxyalkylierte aliphatische, cycloaliphatische oder heterocyclische primäre Amine wie N-Methyldiethanolamin, N-Ethyldiethanolamin, N-Propyldiethanolamin, N-Isopropyldiethanolamin, N-Butyldiethanolamin, N-Isobutyldiethanolamin, N-Oleyldiethanolamin, N-Stearyldiethanolamin, oxethyliertes Kokosfettamin, N-Allyldiethanolamin, N-Methyldiisopropanolamin, N-Propyldiisopropanolamin, N-Butyldiiso-propanolamin, N-Cyclohexyldiisopropanolamin, N,N-Dioxyethylanilin, N,N-Dioxyethyltoluidin, N,N'-Dioxyethylpiperazin, Dimethyl-bis-oxethylhydrazin, N-Hydroxyethylpiperazin, polyoxyethylierte Amine wie oxypropyliertes Methyl-diethanolamin, ferner Verbindungen wie N-Methyl-N,N'bis-aminopropylamin, N-Aminopropylen, N'-Dimethylethylendiamin, N-(Aminopropyl)-N-methylethanolamin, N,N'(-Aminopropyl)-N,N'-dimethylethylenamin, N,N'-Bisoxethyl-propylendiamin, 2,6-Diaminopyridin, Diethylaminopropionamid, N,N-Bis-oxethylphenylthiosemicarbazid, N,N-Bisoxethylmethylsemicarbazid, p,p'-Bisaminomethyldibenzylmethylamin, 2-Dimethylamino-2-methyl-propandiol-1,3, sowie N-n-Butyldiethanolamin, N-tert. Butyldiethanolamin, N-Methyldipropanolamin, 1,4-Bishydroxyethylpiperazin, sowie N,N-Bis-(2-hydroxyethyl)p-tuluidin. Das Aminogruppen enthaltende Diol besitzt vorzugsweise nur ein bis zwei tertiäre Stickstoffatome, das Molekulargewicht ist im allgemeinen beispielsweise unter 350, vorzugsweise unter 200.

Das Polyesterurethanharz hat bevorzugt ein Zahlenmittel der Molmasse (Mn) von 3000 bis 200000, besonders bevorzugt unter 50000. Die Aminzahl kann durch die Menge der kationengruppenhaltigen Verbindungen gesteuert werden. Bevorzugt ist mindestens eine tertiäre Aminogruppe pro Molekül vorhanden.

Die Herstellung der geeigneten kationischen Polymere kann nach bekannten Methoden erfolgen. So können z.B. Polyolgemische, bevorzugt lineare Polyole, mit Diisocyanaten im molaren Verhältnis von 0,6 bis 1,4 : 1 gemischt werden. Die Reaktion erfolgt z.B. bei Temperaturen von 20 bis 150°C, gegebenenfalls unter Zusatz von Katalysatoren. Als Polyesterpolyole werden bevorzugt Umsetzungsprodukte von Dicarbonsäuren mit Diolen eingesetzt, wie sie dem Stand der Technik entsprechen. Daneben können auch Kondensationsprodukte von Hydroxycarbonsäuren oder aus Lactonen hergestellte Polyesterdiole eingesetzt werden. Weiterhin ist die Verwendung von Polycarbonatdiolen, Polyetherdiolen, Polyurethandiolen, insbesondere beta-Hydroxyalkylcarbamaten und OH-funktionellen Acrylaten möglich.

Dabei kann bis zu 97 % des Polyolgemisches aus OH-gruppenhaltigen Polyethern oder Polyestern bestehen, bis zu 30 Gew.-% der Polyolmenge können niedrig molekulare Dialkanole mit einer Molmasse von 60 bis 350 sein. Die Anzahl der ionischen Gruppen im Bindemittel beträgt bevorzugt 0,4 bis 6 Gew.-%, bezogen auf den Festkörper. Die Reaktion kann z.B. in inerten Lösungsmitteln durchgeführt werden oder sie kann in der Schmelze durchgeführt werden.

Anionische Bindemittel A2) zum Einsatz in Wasserbasislacken sind z.B. in der EP-A-0 089 497, der DE-A-41 15 042 und der DE-A-39 10 829 beschrieben. Es handelt sich um Bindemittel auf Basis von (Meth)acrylesterpolymerisaten, Polyestern, Polyethern, Polyurethanen oder Epoxidharzumsetzungsprodukten. Sie enthalten anionische Gruppen im Molekül eingebaut, bevorzugt Carboxylgruppen.

Beispielsweise handelt es sich um Polyurethane, d.h. um Umsetzungsprodukte von bevorzugt linearen Polyolen auf Basis von Polyesterpolyolen oder Polyetherpolyolen, mit Isocyanaten, bevorzugt Diisocyanaten, wobei Anteile von anionengruppenhaltigen Substanzen, die zwei gegen Isocyanatgrupen reaktive funktionelle Gruppen aufweisen, z.B. Dihydroxyalkansäuren, mit umgesetzt sind. Die Reaktion der einzelnen Komponenten kann stufenweise erfolgen oder die Synthese wird im Gemisch durchgeführt. Durch Anteile an höherfunktionellen Alkoholen oder Isocyanaten kann gegebenenfalls eine verzweigte Struktur aufgebaut werden. Dabei können nach Neutralisation der ionischen Gruppen in Wasser dispergierbare OH-terminierte Polymere entstehen oder es entstehen NCO-terminierte Prepolymere, die z.B. mit Aminen oder mit Wasser kettenverlängert werden können.

Weitere Beispiele für erfindungsgmäß verwendbare Bindemittel sind in den DE-A-36 28 125, EP-A-260 447 oder DE-A-36 28 124 beschrieben. Es handelt sich dabei um Bindemittel auf Basis von OH-Gruppen haltigen Polyestern und/oder Poly(meth)acrylaten. Dabei weisen die Polyacrylate bevorzugt ein Zahlenmittel der Molmasse Mn von 40000 bis 200000 auf, bevorzugt eine OH-Zahl von 60 bis 250 und eine Säurezahl bis zu 80. Die Glasübergangstemperatur liegt beispielsweise bei -50 und +150°C. Die Poly(meth)acrylatbindemittel können z.B. durch radikalische Umsetzung von alpha,beta-ungesättigten Carbonsäuren mit hydroxylgruppenhaltigen Monomeren, polyungesättigten Monomeren, sowie weitere ungesättigte nicht-reaktive Monomere entstehen.

Die modifizierten Polyester können z.B. durch Umsetzung von wäßrigen Lösungen von COOH-funktionellen Polyestern hergestellt werden, umgesetzt mit ungesättigten Monomeren und einem Gehalt an Emulgatoren. Die Monomere können dabei noch funktionelle Gruppen umfassen, z.B.-COOH, -OH, Epoxid, es ist jedoch günstig, wenn auch nicht-reaktive Monomere eingesetzt werden. Bei der Herstellung werden Basen zum anteiligen Neutralisieren der ionischen Gruppen eingesetzt. Das Zahlenmittel der Molmasse (Mn) liegt bevorzugt bei 2000 bis 100000. Die Herstellung kann nach üblichen dem Fachmann bekannten Verfahren stattfinden.

Gemäß einer bevorzugten Ausführungsform enthalten die erfindungsgemäßen Überzugsmittel als Komponente A) ein oder mehrere kationische Bindemittel, bei denen es sich um Harze aus ethylenisch ungesättigten Monomeren, Poly(meth)acrylatharzen, Polyesterharze und/oder Polyesterurethanharze, jeweils mit durch Säure neutralisierbaren basischen Gruppen, berechnet als Aminzahl von 20 bis 200, mit einem Zahlenmittel der Molmasse (Mn) von 500 bis 50000 und einer Hydroxylzahl von 0 bis 450 handelt.

Gemäß einer weiteren bevorzugten Ausführungsform enthalten die erfindungsgemäßen Überzugsmittel als Komponente A) ein oder mehrere anionische Bindemittel, bei denen es sich um (Meth)acrylesterpolymerisate, Polyester, Polyether, Polyurethane und/oder Epoxidharze, jeweils mit einem Zahlenmittel der Molmasse (Mn) von 2000 bis 200000, anionischen Gruppen entsprechend einer Säurezahl von 5 bis zu 80 und einer OH-Zahl von 60 bis 250 handelt.

Zur besseren Abstimmung der anwendungstechnischen Eigenschaften der Überzugsmittel können bis zu 50 Gew.-% Vernetzer B) bezogen auf die Summe der Festkörpergewichte von A) und B) zugemischt werden. Diese können neutral sein oder sie enthalten ebenfalls die gleichen ionischen Gruppen wie die Lackbindemittel A). Es handelt sich jedoch bevorzugt um neutrale, gegebenenfalls wasserdispergierbare Vernetzer. Bevorzugt sind Aminformaldehydkondensationsharze und/oder blockierte Polyisocyanate. Beispiele für solche Gemische werden in den DE-A-40 11 633 oder DE-A-40 00 889 beschrieben. Die Vernetzer können gegebenenfalls selbst wasserverdünnbar sein oder sie lassen sich zusammen mit den ionischen Basisharzen in eine wasserlösliche Form überführen. Bevorzugt werden 2 bis 25 Gew.-% Vernetzer, bezogen auf die Summe der Festkörpergewichte von A) und B) eingesetzt. Die Komponenten A) und B) können gegebenenfalls kalt oder in der Wärme in der Harzform vermischt werden oder sie können als wäßrige Dispersion miteinander gemischt werden. Dabei sollen unter Herstellungs- und Lagerbedingungen keine chemischen Reaktionen auftreten, die zur Vernetzung oder Gelbildung führen.

Beispielsweise können teil- oder hochveretherte Aminformaldehydkondensationsharze eingesetzt werden. Diese sind in der Literatur schon ausführlich beschrieben.

Weiterhin können die schon in der Literatur bekannten Polyisocyanate, die auch Diisocyanate einschließen, verwendet werden, wobei reaktive Isocyanatgruppen durch Schutzgruppen blockiert sind. Es können auch oligomere Umsetzungsprodukte aus Diisocyanaten oder gegebenenfalls zusammen mit niedermolekularen Polyolen eingesetzt werden oder NCO-Prepolymere. Es werden die bekannten Blockierungsmittel eingesetzt, gegebenenfalls auch als Gemisch, wobei auch Gruppen mit unterschiedlicher Reaktivität eingesetzt werden können.

Bei den erfindungsgemäß einsetzbaren Bindemitteln C) handelt es sich um Harze, die einreagierte ionische Gruppen tragen. Die ionischen Gruppen können anionische Gruppen, bevorzugt Carboxylgruppen, sein oder sie können kationische Gruppen, bevorzugt Aminogruppen sein. Es können gegebenenfalls noch weitere hydrophile nicht-ionische Gruppen vorhanden sein, um die Dispergierbarkeit in Wasser zu unterstützen. Die erfindungsgemäß eingesetzten Harze C) sind insbesondere solche, die als Pastenharze eingesetzt werden. Dabei wird das Bindemittel im Gemisch als eine Pigmentpaste zugegeben.

Es handelt sich beispielsweise um Bindemittel auf Basis von Polyestern, Polyurethanen oder Umsetzungsprodukten von Epoxidharzen. Diese Pastenharze weisen beispielsweise ein Zahlenmittel der Molmasse (Mn) bis zu etwa 30000, beispielsweise 2000 bis 30000, auf und eine Säurezahl von 10 bis 90 oder als kationisches Harz eine Aminzahl von 10 bis 150, beispielsweise 20 bis 150. Nach Neutralisation mindestens eines Teils der Gruppen kann das Harz in die Wasserphase überführt werden.

Solche anionischen Pastenharzbindemittel sind beispielsweise in der DE-A-40 00 889 beschrieben. Es handelt sich bei diesen bevorzugten Pastenharzen um solche auf Basis von Polyesterurethanen, die anionische Gruppen tragen. Diese Harze besitzen insbesondere eine Säurezahl von 10 bis 50 und ein Zahlenmittel der Molmasse (Mn) von 200 bis 30000 und sind nach Neutralisation von 70 bis 100 % der ionischen Gruppen in die Wasserphase überführbar.

Diese Pastenharze werden beispielsweise hergestellt durch Umsetzung von gesättigten Polyesterpolyolen im Gemisch mit Diolen, von denen ein Teil mindestens eine zur Anionenbildung befähigte Säuregruppe enthält, mit einem oder mehreren Diisocyanaten im OH : NCO-Verhältnis von 1,0 bis 1,5 : 1. Die Reaktion erfolgt z.B. bei Temperaturen von 20 bis 150°C, gegebenenfalls unter Zusatz von Katalysatoren, wie z.B. Amine und Organoazoverbindungen.

Als Polyole können beispielsweise Polyesterpolyole aus Dicarbonsäuren und Diolen eingesetzt werden oder auch solche auf Basis von Hydroxycarbonsäuren. Um die Polyesterurethanharze in Wasser lösen zu können, werden anteilsweise Diole eingesetzt, die noch mindestens eine neutralisierbare Säuregruppe enthalten. Geeignete Verbindungen, die zur Anionenbildung befähigt sind, sind z.B. Dimethylolpropionsäure oder 2,2-Dimethylolpropanphosphonsäure. Beispiele für die zur Bildung der Polyesterurethane geeigneten Diisocyanate sind die typischen Lackdiisocyanate. Sie können aliphatisch, alicyclisch, arylaliphatisch oder aromatisch sein, bevorzugt werden solche Isocyanate eingesetzt, die zur NCO-Gruppe ein nicht aromatisches gegebenenfalls substituiertes alpha-C-Atom aufweisen.

Das Äquivalentverhältnis der eingesetzten Diisocyanate wird in Abstimmung mit den eingesetzten Polyolen so gewählt, daß das fertiggestellte Polyesterurethanharz bevorzugt ein Zahlenmittel der Molmasse (Mn) von 3000 bis 50000 aufweist.

Nach Neutralisation von 70 bis 100 % der ionischen Gruppen durch beispielsweise Ammoniak, primäre, sekundäre und/oder tertiäre Alkyl- oder Alkanolamine kann das Pastenharz in die Wasserphase überführt werden. Es entstehen bevorzugt kolloiddisperse Lösungen. Die wäßrigen Dispersionen der Harze C) können z.B. als Pastenharze eingesetzt werden, d.h. aus den wäßrigen Dispersionen der Harze C) können z.B. Pigmentpasten hergestellt werden, d.h. Pigmente und/oder feste Additive können in diesen wäßrigen Bindemittellösungen auf bekannten Aggregaten dispergiert werden.

Als kationische Pastenharze können beispielsweise eingesetzt werden Polyurethanharze auf Basis von OH-haltigen Polyestern im Gemisch mit niedermolekularen Diolen und gegebenenfalls Triolen, die mit Diisocyanaten umgesetzt werden. Dabei sollen keine vernetzten Produkte entstehen. Ein Teil der Diole ist durch aminogruppenhaltige Diolverbindungen ersetzt, die nach Neutralisation für eine Wasserlöslichkeit des entstehenden Bindemittels sorgen. Dabei weisen die Produkte beispielsweise ein Zahlenmittel der Molmasse (Mn) von 2500 bis 30000 auf und eine Aminzahl von 10 bis 150, bevorzugt 40 bis 100.

Die erfindungsgemäßen Überzugsmittel enthalten die Bindemittelkomponenten A), B) und C). A) und B) weisen dabei ionische Gruppen von gleicher Ladung auf, entweder kationisch oder anionisch. Bei den ionischen Gruppen gleicher Ladung kann es sich um Gruppen unterschiedlicher chemischer Natur handeln. Dabei können die Bindemittelkomponenten aus einem Bindemittel oder aus Gemischen von Bindemitteln bestehen. Das Pastenharz C) weist eine zu A) und B) entgegengesetzte ionische Ladung auf. Es liegt in derartigen Mengen vor, daß 0,7 bis 70 % der Anzahl der Ladungen der ionischen Gruppen von A) und B), bevorzugt 0,5 bis 50 %, besonders bevorzugt 1 bis 30 %, neutralisiert werden. Besonders bevorzugt ist die Verwendung von kationischen Bindemitteln A) und B) zusammen mit anionischen Pastenharzen C).

Zusätzlich können weitere Bestandteile im Überzugsmittel vorhanden sein. Die Menge und die Art der Zusatzstoffe richtet sich nach dem Verwendungszweck der Überzugsmittel.

Die erfindungsgemäßen Überzugsmittel können als Grundierungsschicht, als Basislackschicht, als Decklackschicht und/oder als Klarlackschicht eingesetzt werden. Je nach dem Anwendungszweck können Additive eingesetzt werden. Die Pigmentierung wird dem Anwendungszweck angepaßt. So werden beispielsweise Korrosionsschutzpigmente bei der Verwendung als Grundierung eingesetzt oder gegebenenfalls transparente Pigmente oder Additive bei der Verwendung als Klarlack.

Als Additive können beispielsweise bekannte rheologische Additive organischer oder anorganischer Art enthalten sein. Sie wirken z.B. als Verdicker. Als Verdicker sind beispielsweise wasserlösliche Celluloseether, synthetische Polymere mit ionischen und/oder assoziativ wirkenden Gruppen wie Polyvinylalkohol, Poly(meth)acrylamid, Poly(meth)acrylsäure, Polyvinylpyrrolidion, Styrol, Maleinsäureanhydrid-Copolymere und ihre Derivate oder auch hydrophob modifizierte ethoxylierte Polyurethane oder Polyacrylate. Besonders bevorzugt werden aminogruppenhaltige gegebenenfalls teilvernetzte PUR-Verdicker mit einer Aminzahl von 60 bis 780, bevorzugt 150 bis 300, eingesetzt. Zur Rheologiesteuerung können auch Mikrogele eingesetzt werden. Es ist darauf zu achten, daß gegebenenfalls die ionischen Gruppen der Verdicker mit der Polarität der Lackbindemittel übereinstimmen.

Als Pigmente können Effektpigmente oder farbgebende Pigmente eingesetzt werden. Beispiele für solche Pigmente sind anorganische Pigmente wie Titandioxid, Ruß, Eisenoxide und/oder organische Pigmente wie Phthalocyanin, Chinacridone und/oder haloginierte Thioindigopigmente. Weiterhin können Effektpigmente wie feinverteilte Metallpigmente oder Iriodinpigmente eingesetzt werden. Zusätzlich können Füllstoffe wie Bariumsulfat, Talkum oder Schichtsilikate eingesetzt werden. Gegebenenfalls ist es möglich, auch transparente Pigmente zur Erzielung besonderer Effekte zuzusetzen. Für die Verwendung als Grundierungsüberzugsmittel sind auch Korrosionsschutzpigmente wie gegebenenfalls modifizierte Zinkphosphate, Bleiverbindungen, Chromatverbindungen oder organische Korrosionsschutzpigmente zuzusetzen. Werden Klarlacküberzüge hergestellt, können transparente Pigmente, wie z.B. mikronisiertes Titandioxid, mikronisiertes Bariumsulfat oder hochdisperse pyrogene Kieselsäure eingesetzt werden.

Weiterhin können als Additive übliche oberflächen- oder grenzflächenaktive Substanzen, z.B. Netzmittel oder Antischaummittel enthalten sein. Ebenso können, falls erforderlich, Katalysatoren eingesetzt werden.
Weiterhin sind die üblichen zur Neutralisation der Bindemittel notwendigen Substanzen enthalten. Es handelt sich dabei beispielsweise um anorganische oder organische Säuren zur Neutralisation von basischen Gruppen oder zur Neutralisation von Säuregruppen werden organische oder anorganische Basen eingesetzt. Der pH-Wert des wäßrigen Überzugsmittels soll dabei 5 bis 8 betragen, für Metallic-Basecoats insbesondere 6,5 bis 7,5.

Weiterhin können im Überzugsmittel zur Steuerung von Löslichkeits- oder Viskositätsverhalten geringe Mengen organischer Lösungsmittel zugesetzt sein. Es handelt sich im allgemeinen um wasserverdünnbare Lösungsmittel. Solche Lösungsmittel sind beispielsweise Glykole wie Ethylenglykol, Butoxyethanol, Diethylenglykol, Methoxypropanol, Ethoxypropanol, Dipropylenglykoldimethylether, Diacetonalkohol, Alkohole wie Ethanol, n-Butanol, N-Methylpyrrolidon oder Gemische davon. Zur Verbesserung des Verlaufs des Überzugsmittels können anteilsweise auch hochsiedende Lösungsmittel zugesetzt werden wie gesättigte Kohlenwasserstoffe, z.B. Benzinfraktionen, Hexylenglykol, Phenoxyethanol oder 2,2,4-Trimethylpentandiol-1,3-monoisobutyrat. Der Anteil an organischen Lösungsmitteln liegt möglichst niedrig. Es liegt beispielsweise unter 15 %, bevorzugt unter 5 Gew.-%.

Die Herstellung von Pigmentanreibungen aus den Pastenharzen ist im Prinzip bekannt. Beispielsweise kann aus einer lösungsmittelhaltigen Bindemittelmischung oder bevorzugt in einer wäßrigen neutralisierten Bindemitteldispersion unter Zugabe von Additiven und Pigmenten durch Vermahlen eine Pigmentpaste hergestellt werden. Insbesondere ist es auch möglich, feste, schlecht wasserlösliche Additive in dem Pastenharz zu dispergieren. Als Dispergieraggregate eignen sich Rührscheibengeräte, Drei-Walzen-Stühle, Kugelmühlen oder Sand- oder Perlmühlen. Zur Einstellung der Viskosität der Pigmentpaste zum Vermahlen können geringe Mengen an Wasser oder Lösungsmitteln zugesetzt werden.

Die Pigmentpasten enthalten 5 bis 65 Gew.-% Pigment und/oder Füllstoff zusammen mit 95 bis 35 Gew.-% des Harzes der Komponente C). Es können zusätzlich 0 bis 40 Gew.-% Wasser sowie 0 bis 20 Gew.-% eines oder mehrerer organischer Lösemittel vorhanden sein. Die entstehenden Pigmentpasten sind lagerstabil und sedimentieren nicht.

Aus den Pigmentpasten sowie den wäßrigen Bindemitteldispersionen wird das fertige Überzugsmittel hergestellt. Dabei kann die Pigment- oder Additivpaste der gesamten Menge der gegenionischen Bindemittel zugesetzt werden. Dabei kann bevorzugt entweder die Lackbindemittelmischung in Dispersionsform der Mischung aus der wäßrigen Pigmentpaste gegebenenfalls mit der Aluminiumbronzepaste zugesetzt werden oder die wäßrige Pigmentpaste wird der Bindemitteldisperison gemischt mit gegebenenfalls Aluminiumbronzepaste, Additiven und Verdickerlösungen zugesetzt. Dabei ist auf eine gute Homogenisierung während des Mischprozesses zu achten. Über die Auswahl der Bindemittel kann erreicht werden, daß die Mischung aus Aluminiumbronze und wäßriger Paste eine besonders lagerstabile Form besitzt.

Es werden keine Flockulation der Pigmente oder Ausfällungen von Bindemitteln beobachtet. Die aus den Pigmentpasten und den Bindemitteldispersionen hergestellten wasserverdünnbaren Überzugsmittel sind als Industrielacke, besonders z.B. in der Automobilindustrie, einsetzbar. Enthalten sie z.B. Aluminiumplättchen, so werden sie als Metallic-Lacke eingesetzt. Enthalten sie farbige deckende Pigmente können sie als Uni-Basislacke oder als Decklacke eingesetzt werden. Enthalten sie transparente oder keine Pigmente, können sie als Klarlacküberzugsmittel eingesetzt werden. Enthalten sie Korrosionsschutzpigmente bzw. haftvermittelnde Substanzen können sie als Grundierung auf Metall- oder Kunststoffsubstraten eingesetzt werden.

Je nach Anwendungszweck können physikalisch trocknende Systeme, chemisch vernetzende 1-Komponentensysteme oder 2-Komponentensysteme erhalten werden.

Die erfindungsgemäßen Überzugsmittel werden mit bekannten Verfahren wie Tauchen, Spritzen, Gießen, Streichen oder Fluten aufgetragen. Bevorzugt wird der Spritzauftrag angewendet, besonders bevorzugt Druckluftspritzen, Airlesspritzen, Heißspritzen oder elektrostatisches Spritzen.

Die Erfindung betrifft auch die Verwendung der erfindungsgemäßen Überzugsmittel zur Herstellung von Überzügen durch Auftrag mittels Spritzen, Gießen, Streichen oder Fluten.

Die Erfindung betrifft auch die Verwendung der erfindungsgemäßen Überzugsmittel zur Herstellung von Einschicht- oder Mehrschichtüberzügen, insbesondere als Grundierungen, Füllerschichten, Basislacke, Decklacke oder Klarlacke, insbesondere auf dem Kraftfahrzeugsektor.

Werden die Überzugsmittel als Füllerüberzugsmittel eingesetzt, so werden sie nach dem Auftragen mit Folgeüberzugsmitteln überbeschichtet. Werden die Überzugsmittel als Basislack eingesetzt, wird bevorzugt naß-in-naß eine Klarlackschicht aufgetragen. Diese kann aus bekannten Klarlacküberzugsmitteln, z.B. 2K-Klarlacke, hochfestkörperreiche Klarlacke, wäßrige Klarlacke, UV-härtende Klarlacke oder Pulverklarlacken bestehen.

Werden die erfindungsgemäßen Überzugsmittel als Klarlacküberzüge eingesetzt, werden sie im allgemeinen auf einen thermisch vernetzten Basislack oder bevorzugt auf einen Basislack naß-in-naß aufgetragen. Nach dem Auftragen des Klarlacküberzugsmittels wird dieser durch erhöhte Temperatur zum Vernetzen gebracht.

Die Härtung der aufgetragenen Filme erfolgt nach bekannten Verfahren. Je nach dem gewählten Überzugsmittel bzw. dem Vernetzungssystem kann bei Raumtemperatur gegebenenfalls auch bei höherer Temperatur getrocknet oder vernetzt werden. Es ist möglich, die erfindungsgemäßen Schichten einzeln zu trocknen/vernetzen oder sie werden im Naß-in-Naß-Verfahren überbeschichtet und zusammen mit einer weiteren Lackschicht vernetzt. Dabei können die Temperaturen z.B. zwischen 10 und 180°C liegen. Bei 2-Komponentenlacken liegen die Vernetzungstemperaturen z.B. zwischen 20 und 120°C, bei in der Wärme vernetzenden Systemen liegen die Temperaturen z.B. zwischen 100 und 180°C.

Die Erfindung betrifft somit auch ein Verfahren zur Herstellung von Einschicht- oder Mehrschichtüberzügen, bei dem ein gegebenenfalls beschichtetes Substrat mit einem Überzug aus einem erfindungsgemäßen Überzugsmittel beschichtet wird und gegebenenfalls ein oder mehrere weitere Überzüge aufgebracht werden. Insbesondere wird das Verfahren zur Lackierung von Kraftfahrzeugen oder deren Teilen durchgeführt.

Die erfindungsgemäß erstellten Überzüge können als Einschicht- oder als Mehrschichtüberzüge ausgebildet sein. Als Substrat sind verschiedene Substrate wie z.B. Metallsubstrate oder Kunststoffsubstrate möglich. Diese können gegebenenfalls auch vorbeschichtet sein. Auf diesen Substraten werden die erfindungsgemäßen Überzugsmittel aufgetragen. Dabei ist es möglich, daß nur ein erfindungsgemäßes Überzugsmittel eingesetzt wird oder es können auch mehrere Überzugsmittel nacheinander aufgetragen werden.

Die Mehrschichtlackierungen mit dem erfindungsgemäßen Überzugsmittel zeichnen sich durch gute Haftung und gute technologische Eigenschaften aus. Sie sind in der Industrie zum Beschichten von Metall und/oder Kunststoffoberflächen, z.B. Kühlschränken, einzusetzen und besonders für die Kraftfahrzeuglackierung geeignet. Sie sind sowohl in der Serienlackierung als auch in der Reparaturlackierung einsetzbar. Durch die erfindungsgemäßen Mehrschichtüberzüge werden sehr gute optische Eigenschaften bei gleichzeitig ausgezeichneten Härte- und Elastizitätseigenschaften und hervorragender Wetterfestigkeit erzielt.

### Herstellungsbeispiel 1 (Amino-poly(meth)acrylatharz)

725 g Butoxyethanol werden unter Inertgas auf 110°C unter Einschalten eines Rückflußkühlers erwärmt. Innerhalb von 3 Stunden wird eine Mischung aus 192 g Hydroxyethylacrylat, 137 g Butandiol-monoacrylat, 228 g Glycidylmethacrylat, 364 g 2-Ethyl-hexylacrylat, 439 g Butylmethacrylat, 438 g Methylmethacrylat, 90 g Styrol und 44 g Azo-bis-isobutyronitril zugegeben. Danach wird 1 Stunde bei 110°C gehalten, 6 g Azo-bis-isobutyronitril zugegeben und dieser Vorgang nach einer weiteren Stunde wiederholt. Nach 3 Stunden 110°C wird ein Festkörpergehalt von 72,2 Gew.-% und nach Verdünnen auf 60 Gew.-% mit Butoxyethanol eine Viskosität von 2,14 Pa.s bei 25°C gemessen. Nach Abkühlen auf 50°C werden ein Gemisch von 120 g Diethylamin und 201 g Isopropanol schnell zugegeben (1.10 Mol Amin auf 1.00 Mol Epoxid). Nach 30 Minuten wird auf 65°C erwärmt, dann 2 Stunden gehalten, anschließend auf 105 bis 110°C aufgeheizt und dann 3 Stunden gehalten. Nach Abkühlen auf 80°C wird unter Vakuum Isopropanol und Aminüberschuß sorgfältig abdestilliert. Einstellen des Festkörpergehaltes mit Butoxyethanol auf etwa 78 Gew.-%.

### Endwerte:

Festkörpergehalt: 78,7 Gew.-% (30 Minuten Erwärmen auf 150°C)
Aminzahl: 45 mg KOH pro g Festharz
Viskosität: 3,44 Pa.s (60 Gew.-% in Butoxyethanol bei 25°C)

Das Harz ist beim Lagern viskositätsstabil und gibt nach Kombination mit Vernetzungsmitteln nicht-vergilbende glatte Oberflächen.

### Herstellungsbeispiel 2 (Polyurethan-Dispersion)

In einem Reaktionsgefäß mit Rührer, Innenthermometer, Heizung und Rückflußkühler werden unter Inertgas 912 g eines Polyesters (aufgebaut aus Adipinsäure, Isophthalsäure, Hexandiol-1.6, und Neopentylglykol mit einer OH-Zahl von 113 und einer Säurezahl von 1) bei ca. 45°C gemischt mit 191 g Methyldiethanolamin und 185 g N-Methylpyrrolidon.
Anschließend werden 697 g Isophorondiisocyanat zugegeben und die exotherme Reaktion durch Kühlen und Heizen bei 80°C gehalten, bis die NCO-Zahl ca. 3,3 beträgt. Nach Zusatz von 185 g N-Methylpyrrolidon wird auf Raumtemperatur gekühlt. Innerhalb von 5 Minuten werden 32,6 g Ethylendiamin in 485 g trocknem Aceton zugegeben, wobei die Temperatur bis auf 35°C ansteigt. Nach 10 Minuten wird ein Gemisch aus 11152 g vollentsalztem Wasser und 63,4 g Ameisensäure (85 %ig) eingerührt und danach unter Zusatz von 2026 g Wasser eine Emulsion hergestellt. Das Aceton wird durch Aufheizen auf 90°C gegebenenfalls unter Anlegen von Vakuum abdestilliert.

### Endwerte:

Festkörpergehalt: 42 Gew.-% (60 Minuten Erwärmen auf 150°C)
Aminzahl: 52 mg KOH pro g Festharz
MEQ-Wert: ca. 60 (milliäquivalente Säure pro g Festharz)
Neutralisationsgrad: 75 %.

### Herstellungsbeispiel 3

In einem Reaktionsgefäß mit Rührer, Innenthermometer, Heizung und Rückflußkühler werden unter Inertgas 885 g eines Polyesters (aufgebaut aus Adipinsäure, Isophthalsäure, Hexandiol-1,6 und Neopentylglykol mit einer OH-Zahl von 105 und einer Säurezahl von 1,4) und 170 g 2-(Dimethylaminomethyl)-2-ethyl-1,3-Propandiol, in 300 g Aceton bei 45°C gemischt.

Anschließend werden 410 g Isophorondiisocyanat so zugegeben, daß die Temperatur bei 80°C gehalten wird. Ist eine NCO-Zahl von unter 0,1 % erreicht, werden 53 g Ameisensäure (85 % in Wasser) zugegeben und gut eingearbeitet. Nach Zusatz von 3100 g vollentsalztem Wasser erhält man eine feinteilige Polyurethandispersion. Aceton wird im Vakuum abdestilliert.

### Endwerte:

Festkörpergehalt: 35 Gew.-%, 60 min., 150°C,

| | |
|---|---|
| Aminzahl | 45 |
| MEQ-Säure | ca. 65 |
| pH | ca. 5,7. |

### Herstellungsbeispiel 4 (Pastenharz 1)

In einem Reaktionsgefäß mit Innenthermometer und Rückflußkühler werden 1687 g eines linearen, gesättigten Polyesters (aufgebaut aus Adipinsäure, sowie Neopentylglykol und Hexandiol-1,6 im Molverhältnis 1 : 1) mit einer Hydroxylzahl von 104 und einer Viskosität bei 25°C von 2,6 Pa.s unter gutem Rühren mit 275 g Dimethylolpropionsäure und 796 g Dicyclohexylmethandiisocyanat kalt gemischt und nach Abklingen der exothermen Reaktion erwärmt und bei 120°C gehalten bis der NCO-Gehalt unter 0.8 % liegt. Danach wird mit 888 g Butoxyethanol verdünnt:

| | |
|---|---|
| Festkörper (30 min 150°C) | 75 Gew.-% |
| Säurezahl (bezogen auf Festkörper) | 38 |
| Viskosität (bei 25°C) nach Verdünnen auf 40 % mit Butoxyethanol | 60 mPa.s* |

Aus 1920 g dieser Harzlösung werden dann ein Gemisch aus 88,6 g Dimethylisopropanolamin und 88,6 g Wasser schnell zugegeben. Nach 15 Minuten Rühren langsam mit 2350 g Wasser verdünnen zu einer hochviskosen fast klaren Paste mit folgenden Endwerten:

| | |
|---|---|
| Festkörper (30 min. 150°C) | 34,1 Gew.-% |
| Viskosität (bei 25°C) | 400 mPa.s* |
| MEQ-Wert | 55 |
| pH-Wert | 8,6 |

### Herstellungsbeispiel 5 (Pastenharz 2)

In einem Reaktionsgefäß mit Innenthermometer und Rückflußkühler werden 1395 g eines linearen, gesättigten Polyesters (aufgebaut aus Adipinsäure und Hydroxypivalinsäureneopentylglykolester) mit einer OH-Zahl von 112 und einer Viskosität bei 25°C von 8,7 Pa.s unter gutem Rühren mit 161 g Dimethylolpropionsäure und 163 g Trimethylpropan zum Lösen auf 90°C erwärmt und dann auf 50°C abgekühlt. Nach Zusatz von 865 g Tetramethylxylylen-diisocyanat wird langsam auf 120°C gehalten bis der NCO-Gehalt unter 0.2 % liegt. Danach wird mit 861 g Methoxypropanol verdünnt:

| | |
|---|---|
| Festkörper (30 min. 150°C) | 75 Gew.-% |
| Säurezahl (bezogen auf Festkörper) Viskosität bei 25°C, mit Methoxypropanol | 27 |
| auf 40 % verdünnt | 210 mPa.s* |

Auf 1963 g dieser Harzlösung werden ein Gemisch aus 58,3 g Dimethylethanolamin und 58,3 g Wasser schnell zugegeben und auf 80°C erwärmt. Danach langsam mit 2585 g Wasser verdünnen zu einer trüben, in der Wärme gut verarbeitbaren hochviskosen Paste mit folgenden Kennzahlen:

| | |
|---|---|
| Festkörper (30 min. 150°C) | 32,3 Gew.-% |
| Viskosität bei 25°C | 1,3 Pa.s* |
| MEQ-Wert | 42 |
| pH-Wert | 7,6 |

### Herstellungsbeispiel 6 (Pastenharz 3)

In einem Reaktionsgefäß mit Innenthermometer und Rückflußkühler werden 551 g eines linearen, gesättigten Polyesters (aufgebaut aus Adipinsäure und Hexandiol-1,6) mit einer Hydroxylzahl von 86 unter gutem Rühren mit 59,7 g Cyclohexandimethanol und 64 g Dimethylolpropionsäure in 297 g N-Methylpyrrolidon bei 50°C gelöst und 216 g Hexandiisocyanat so langsam zuzugeben, daß die Temperatur nicht über 55°C ansteigt. Nach Abklingen der exothermen Reaktion bei 65°C halten bis der NCO-Gehalt kleiner 0,8 %. Anschließend mit 26,7 g Methanol verdünnt.

| | |
|---|---|
| Festkörper (30 min. 150°C) | 73,4 Gew.-% |
| Säurezahl (bezogen auf Festkörper) = Viskosität bei 25°C, nach Verdünnen auf | 31 |
| 40 % in NMP | 60 mPa.s* |
| Gelpermeationschromatographie Mn = 2200 in THF Mw = 10000 | |

564 g dieser Harzlösung werden auf 80°C erwärmt und ein Gemisch aus 24,6 g Triethylamin und 24,6 g Wasser zugegeben. Nach 5 Minuten langsam mit 103,4 g Butoxyethanol und 501,6 g Wasser verdünnen zu einer in der Wärme gut verarbeitbaren, trüben hochviskosen Paste mit folgenden Kennzahlen:

| | |
|---|---|
| Festkörper (30 min. 150°C) | 31,6 Gew.-% |
| Viskosität bei 25°C | 510 mPa.s* |
| MEQ-Wert | 58 |
| pH-Wert | 8,9 |

### Kationischer Wasserbasislack mit anionischer Tönpaste

### Herstellungsbeispiel 7 (Pigmentpaste schwarz)

300 g Pastenharz 1 einer PUR-Dispersion aus Herstellungsbeispiel 4 werden mit 135 g eines handelsüblichen sauren Flammruß-Pigments mit einem mittleren Teilchendurchmesser von 13 nm vermischt und mit handelsüblichem tertiärem Amin oder Aminoalkohol auf einen pH-Wert von 8 bis 9 gebracht. Mit VEW wird auf einen Gesamtfestkörper von ca. 50 Gew.-% verdünnt. Diese Mischung wird mit üblichen Dispergieraggregaten wie Dissolver, Dreiwalz, Kugelmühle, Sandmühle, Perlmühle oder Rotor-Stator-Aggregate transparent ausdispergiert. Dieses Pigmentkonzentrat wird zum pigmentieren von Basislacken verwendet.
(VEW = vollentsalztes Wasser)

### Herstellungsbeispiel 8 (Pigmentpaste rot)

350 g eines handelsüblichen Küpenpigments mit Coulor-Index Red 168 werden mit 300 g einer PUR-Dispersion nach Herstellungsbeispiel 4 gemischt. Mit üblichen Neutralisationsmitteln wir z.B. tertiären Aminen oder Aminoalkoholen wird der pH-Wert auf 8 bis 9 korrigiert und mit VEW auf einen Gesamtfestkörper von ca. 50 Gew.-% verdünnt. Die Mischung wird wie bei Beispiel schwarz beschrieben dispergiert.

### Herstellungsbeispiel 9 (Pigmentpaste weiß)

In 20 g einer PUR-Dispersion nach Herstellungsbeispiel 4 werden 60 g eines handelsüblichen Titandioxid (Rutil-Typ)-Pigments eingetragen. Mit üblichen Neutralisationsmitteln wird gegebenenfalls auf pH-Wert von 8 bis 9 korrigiert und mit VEW auf Gesamtfestkörper von 70 % verdünnt.

Mit dem Dissolver wird auf eine Korngröße von unter 10 µm dispergiert.

### Herstellungsbeispiel 10 (Pigmentpaste schwarz, kationisch)

300 g der Dispersion aus Herstellungsbeispiel 3 werden mit 135 g eines handelsüblichen sauren Flammruß-Pigments mit einem mittleren Teilchendurchmesser von 13 nm vermischt. Ohne weitere Neutralisation wird mit vollentsalztem Wasser auf einen Gewichtsfestkörper von 50 % eingestellt.

Die Mischung wird in üblicher Weise mit dem Dissolver vordispergiert und auf bekannten Dispergieraggregaten wie z.B. Dreiwalze, Kugel-, Sand-, oder Perlmühle oder einem geeigneten Rotor/Statoraggregat transparent ausdispergiert.

### Herstellungsbeispiel 11 (Pigmentpaste rot, kationisch)

300 g der PUR-Dispersion aus Herstellungsbeispiel 3 werden mit 350 g eines handelsüblichen Küpenpigmentes mit Coulor-Index Red 168 vermischt. Mit vollentsalztem Wasser wird auf einen Gesamtfestkörper von 50 % eingestellt. Die Mischung wird wie bei Beispiel 6 beschrieben dispergiert.

### Herstellungsbeispiel 12 (Pigmentpaste weiß, kationisch)

200 g der PUR-Dispersion aus Herstellungsbeispiel 3 werden mit 600 g eines handelsüblichen Titandioxid-Pigmentes vom Rutiltyp vermischt. Mit üblichen Neutralisationsmitteln wie tertiären Aminen oder Aminoalkoholen wird auf pH 5 bis 7 und mit vollentsalztem Wasser auf einen Gesamtfestkörper von 70 % eingestellt. Mit dem Dissolver wird auf eine Korngröße unter 10 µm dispergiert. Die erhaltenen Pigmentkonzentrate werden zur Farbgebung von wasserverdünnbaren Basislacken verwendet.

### Erfindungsgemäßer Wasserbasislack

### Herstellungsbeispiel 13 (Uni-Basislack, schwarz)

530 g des Bindemittels aus Beispiel 1 werden vorgelegt. 50 g Pigmentpaste schwarz nach Herstellungsbeispiel 7 werden untergerührt.

Dazu werden unter Rühren nacheinander zugefügt: 100 g Dispersion nach Herstellungsbeispiel 1, weiter 150 g aus Herstellungsbeispiel 3, 60 g eines handelsüblichen mittelreaktiven, wasserverdünnbaren Melaminharzes mit einem Gewichtsfestkörper von ca. 75 % in Lösemittel und gegebenenfalls einem handelsüblichen Entschäumer in einer Menge von 5 bis 20 g.

### Herstellungsbeispiel 14 (Uni-Basislack rot)

Wie Beispiel schwarz. Nur werden anstelle der 50 g Pigmentpaste schwarz, 50 g Pigmentpaste rot verwendet.

### Herstellungsbeispiel 15 (erfindungsgemäßer Metallic-Basislack)

66 g handelsüblicher Aluminium-Bronce für wasserverdünnbare Basislacke werden mit 65 g Butylglykol und 16 g N-Methylpyrrolidon aufgeschlossen. 50 g üblicher Verdicker auf Polymerbasis werden zur Stabilisierung eingerührt. AnschlieBend werden nacheinander zugerührt: 680 g Harz aus Herstellungsbeispiel 1, 65 g Vernetzer wie in Basislack schwarz. Gegebenenfalls werden bis maximal 20 g handelsüblicher Entschäumer und je nach Farbwunsch 20 bis 50 g Pigmentkonzentrat schwarz und/oder rot eingerührt nach Herstellungsbeispiel 7 oder 8.

Alle Basislacke werden mit VEW auf Spritzviskosität von ca. 50 bis 80 mPa.s eingestellt.

Auf grundierte Bleche (KTL + Einbrennfüller) werden die Basislacke entsprechend ihrem Deckvermögen mit einer Schichtdicke von 12 bis 20 µm bei Metallics und bis zu 50 µm bei Uni-Basislacken spritzappliziert. Nach kurzer Zwischentrocknung z.B. 10°C bis 80°C wird mit einem handelsüblichen 1-Komponenten-Melaminharz-härtender oder 2-Komponenten Isocyanat-härtender Klarlack (wasser- oder lösemittelverdünnbar) überlackiert und gemeinsam bei Temperaturen zwischen 80°C bis 150°C 20 bis 45 min. getrocknet.

Im Aufbau mit Melaminharz härtendem Einbrennklarlack ergeben sich in einer Vergleichsprüfung zu rein anionischem bzw. rein kationischem Basislack (siehe Vergleichsversuch 16), deutliche Vorteile, insbesondere in der Schwitzwasserbeständigkeit und Haftungsprüfung.

### Vergleichsversuch 16

Zu 945 g Amino-poly(meth)acrylatharz nach Herstellungsbeispiel 1 werden 555 g Titandioxid gegeben und 5 Minuten mit dem Dissolver dispergiert. Anschließend wird die Paste 40 Minuten bei Temperaturen bis zu 60°C in einer Perlmühle vermahlen.
Festkörper: 86,6 Gew.-% (nach 30 Minuten Erwärmen auf 150°C) Pigment-Bindemittelverhältnis = 0,75 : 1.

772 g der Paste werden zusammen mit 111 g eines höhermolekularen Methoxy-Iminoqruppen enthaltenden Melaminharzes (80 %ig gelöst in Isobutanol), und 17,7 g einer amingeblockten Sulfonsäure (25 %ig) als Katalysator unter dem Dissolver gut verrührt. Anschließend wird im Dissolver unter gutem Rühren weiter verdünnt, und zwar erst mit 7,6 g Ameisensäure (85 %ig) und dann langsam mit 142 g vollentsalztem Wasser. Nach Stehen über Nacht wurden 100 g des Lackes mit 62 g vollentsalztem Wasser auf eine Spritzviskosität von 30 Sekunden im Auslaufbecher (DIN 53 211) eingestellt und mit dem Spritzautomaten auf grundierte Bleche gespritzt.

Der Basislack wird 6 Minuten bei 80°C vorgetrocknet und anschließend mit ca. 40 µm Wasser-Klarlack nach Herstellungsbeispiel 17 überlackiert. Es wird 15 Minuten bei 80°C vorgeliert und danach beide Schichten gemeinsam 20 Minuten bei 120°C eingebrannt (Unterbrennbedingung).

### Herstellungsbeispiel 17 (wäßriger Klarlack nach DE-A-39 10 829, Beispiel 3)

### Herstellung eines Polyesteroligomeren

336,7 g Trimethylolpropan, 366,8 g Adipinsäure und 297 g Hexandiol werden mit 5 g unterphosphoriger Säure in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl < 1,5 kondensiert. Das so erhaltene Produkt hat einen Einbrennrückstand von 94,5 Gew.-% (1 h, 150°C), eine Viskosität von 3200 mPa.s (100 %ig), eine Hydroxylzahl von 460 und eine Farbzahl von 30 Hazen.

### Herstellung von Polyesteroligomer-Polyacrylaten

717 g des vorstehend hergestellten Polyesteroligomeren werden mit 597 g Ethanol in einem Rührer, Rückflußkühler, Tropftrichter und Thermometer versehenen 4-Liter-Dreihalskolben auf 81°C bis zum Rückfluß erhitzt. Anschließend wird in 4 Stunden eine Mischung aus 552 g Butandiolmonoacrylat, 996 g tert.Butylacrylat, 74 g Acrylsäure und 50 g Vazo 67 (2,2-Azo-bis-2-Methylbutyronitril) zugetropft und anschließend 4 Stunden nachpolymerisiert. Das Produkt hatte einen Einbrennrückstand von 79,8 Gew.-% (1 h, 150°C) bei einer Viskosität von 7200 mPa.s (DIN 53 015), eine Säurezahl von 26,3, eine OH-Zahl von 231 und eine Farbzahl von 60 Hazen.

### Herstellung des wasserverdünnbaren Klarlacks

651,2 g des vorstehend hergestellten Polyesteroligomer-Polyacrylats, 348 g eines käuflichen hochiminofunktionellen Melaminharzes und 152,8 g Ethanol wurden unter einem Laborrührer gut vorgemischt und unter weiterem Rühren mit einem Gemisch aus 50,7 g Butoxyethanol, 20,7 g eines UV-Absorbers vom Benztriazoltyp und 13,7 g eines Radikalfängers vom HALS-Typ (HALS = hindered amine light stabilisator) versetzt. Danach wurde unter Rühren mit 27 g Dimethylethanolamin neutralisiert, weitere 15 Minuten gerührt und anschließend mit einem Gemisch aus 972,6 g vollentsalztem Wasser und 15,4 g Ethanol verdünnt. Der Lack hatte eine Viskosität von 31 Sekunden (gemessen im DIN-4-Becher bei 20°C) und einen pH-Wert von 9,0.

## Patentansprüche

1. Überzugsmittel, enthaltend eine wäßrige Mischung aus
I. 99 - 70 Gew.-% eines Gemisches aus
A) 50 - 100 Gew.-% eines oder mehrerer Bindemittel, die zumindest teilweise ionische Gruppen tragen.
B) 0 - 50 Gew.-% eines oder mehrerer Vernetzer für die Bindemittel A), die zumindest teilweise ionische Gruppen tragen können, wobei die vorhandenen ionischen Gruppen die gleiche Ladung wie die der Komponente A) tragen und
II. 1 - 30 Gew.-% eines oder mehrerer Bindemittel (Komponente C) in Form einer wäßrigen Dispersion, wobei die Bindemittel mit den Bindemitteln der Komponente A) sowohl bei der Lagerungstemperatur als auch bei der Härtungstemperatur der Überzugsmittel miteinander mischbar sind und die ionische Gruppen tragen, deren Ladung entgegengesetzt zur Ladung der ionischen Gruppen der Komponente I) ist, und wobei zumindest ein Teil der ionischen Gruppen neutralisiert ist und wobei sich die Gew.-% jeweils auf das Harzfestkörpergewicht beziehen und wobei die Anteile der Komponenten I) und II) so aufeinander abgestimmt sind, daß 0,5 bis 70 % der Anzahl der Ladungen der ionischen Gruppen von I) durch die Ladungen der ionischen Gruppen von II) neutralisiert sind, sowie
III. übliche Lackadditive und/oder Pigmente und/oder Füllstoffe, sowie gegebenenfalls ein oder mehrere lackübliche Lösemittel,
wobei Komponente C) in Form einer Pigmentpaste zugesetzt ist, die 5 bis 65 Gew.-% eines oder mehrerer Pigmente und/oder Füllstoffe zusammen mit 95 bis 35 Gew.-% des Harzes der Komponente C) enthält.

2. Überzugsmittel nach Anspruch 1, dadurch gekennzeichnet, daß die Komponente I ionische Gruppen entsprechend einer Aminzahl von 20 bis 200 oder entsprechend einer Säurezahl von 5 bis 80 und die Bindemittel der Komponente C, ionische Gruppen entsprechend einer Säurezahl von 10 bis 90 oder einer Aminzahl von 10 bis 150 tragen.

3. Überzugsmittel nach Anspruch 1, dadurch gekennzeichnet, daß die Pigmentpaste 0 bis 40 Gew.-% Wasser und/oder 0 bis 20 Gew.-% eines oder mehrerer organischer Lösemittel enthält, wobei sich die Gew.-% jeweils auf die gesamte Pigmentpaste beziehen.

4. Überzugsmittel nach einem der vorhergehenden Ansprüche, dadurch gekennzeichnet, daß die Komponente A) ein oder mehrere kationische Bindemittel, die Komponente B) ein oder mehrere kationische und/oder neutrale Vernetzer und die Komponente C) ein oder mehrere anionische Bindemittel enthalten.

5. Überzugsmittel nach einem der Ansprüche 1 bis 3, dadurch gekennzeichnet, daß die Komponente A) ein oder mehrere anionische Bindemittel, die Komponente B) ein oder mehrere anionische und/oder neutrale Vernetzer und die Komponente C) ein oder mehrere kationische Bindemittel enthält.

6. Überzugsmittel nach einem der Ansprüche 1 bis 4, dadurch gekennzeichnet, daß die Komponente A) ein oder mehrere kationische Bindemittel enthält, bei denen es sich um Harze aus ethylenisch ungesättigten Monomeren, Poly(meth)acrylatharze, Polyesterharze und/oder Polyesterurethanharze, jeweils mit durch Säure neutralisierbaren basischen Gruppen, berechnet als Aminzahl von 20 bis 200, mit einem Zahlenmittel der Molmasse (Mn) von 500 bis 50000 und einer Hydroxylzahl von 0 bis 450 handelt.

7. Überzugsmittel nach einem der Ansprüche 1 bis 3 und 5, dadurch gekennzeichnet, daß die Komponente A) ein oder mehrere anionische Bindemittel enthält, bei denen es sich um (Meth)acrylesterpolymerisate, Polyester, Polyether, Polyurethane und/oder Epoxidharze, jeweils mit einem Zahlenmittel der Molmasse (Mn) von 2000 bis 200000, anionischen Gruppen entsprechend einer Säurezahl von 5 bis zu 80 und einer OH-Zahl von 60 bis 250 handelt.

8. Überzugsmittel nach einem der Ansprüche 1 bis 4 und 6, dadurch gekennzeichnet, daß die Komponente C) ein oder mehrere Bindemittel auf der Basis von Polyestern, Polyurethanen oder Umsetzungsprodukten von Epoxidharzen enthält, die jeweils ein Zahlenmittel der Molmasse (Mn) von 2000 bis 30000 aufweisen und anionische Gruppen entsprechend einer Säurezahl von 10 bis 90 enthalten.

9. Überzugsmittel nach einem der Ansprüche 1 bis 3, 5 und 7, dadurch gekennzeichnet, daß die Komponente C) ein oder mehrere Bindemittel auf der Basis von Polyestern, Polyurethanen oder Umsetzungsprodukten von Epoxidharzen enthält, jeweils mit einem Zahlenmittel der Molmasse (Mn) von 2000 bis 30000 und kationischen Gruppen, berechnet als Aminzahl von 10 bis 150.

10. Verfahren zur Herstellung von Einschicht- oder Mehrschichtüberzügen, dadurch gekennzeichnet, daß man ein gegebenenfalls beschichtetes Substrat mit einem Überzug aus einem Überzugsmittel nach einem der Ansprüche 1 bis 9 beschichtet und gegebenenfalls einen oder mehrere weitere Überzüge aufbringt.

11. Verfahren nach Anspruch 10, dadurch gekennzeichnet, daß es zur Lackierung von Kraftfahrzeugen oder deren Teilen durchgeführt wird.

12. Verwendung der Überzugsmittel nach einem der Ansprüche 1 bis 9 zur Herstellung von Einschicht- oder Mehrschichtüberzügen.

13. Verwendung der Überzugsmittel gemäß einem der Ansprüche 1 bis 9 als Grundierungen, Füllerschichten, Basislacke, Decklacke oder Klarlacke, insbesondere auf dem Kraftfahrzeugsektor.

14. Verwendung einer der Überzugsmittel gemäß einem der Ansprüche 1 bis 9 zur Herstellung von Überzügen durch Auftrag mittels Spritzen, Gießen, Streichen oder Fluten.

15. Verfahren zur Herstellung eines Überzugsmittels nach einem der Ansprüche 1 bis 9, dadurch gekennzeichnet, daß man die in den Ansprüchen 1 bis 9 definierten Komponenten miteinander vermischt.

## Claims

1. Coating composition containing an aqueous mixture of
I. 99-70 wt.% of a mixture of
A) 50-100 wt.% of one or more binders, which at least in part bear ionic groups,
B) 0-50 wt.% of one or more crosslinking agents for the binders A), which may at least in part bear ionic groups, wherein the ionic groups present bear the same charge as those in component A) and
II. 1-30 wt.% of one or more binders (component C) in the form of an aqueous dispersion, wherein the binders are mutually miscible with the component A) binders at both the storage temperature and the curing temperature of the coating compositions, and which binders bear ionic groups, the charge of which is contrary to the charge of the ionic groups of component I), and wherein at least a proportion of the ionic groups is neutralised and wherein the weight percentages in each case relate to the weight of resin solids and wherein the proportions of components I) and II) are adjusted relative to each other in such a manner that 0.5 to 70% of the number of charges of the ionic groups of I) are neutralised by the charges of the ionic groups of II), as well as
III. conventional lacquer additives and/or pigments and/or extenders, optionally together with one or more conventional lacquer solvents,
wherein component C) is added in the form of a pigment paste, which contains 5 to 65 wt.% of one or more pigments and/or extenders together with 95 to 35 wt.% of the component C) resin.

2. Coating composition according to claim 1,
characterised in that component I bears ionic groups corresponding to an amine value of 20 to 200 or corresponding to an acid value of 5 to 80 and the component C binders bear ionic groups corresponding to an acid value of 10 to 90 or to an amine value of 10 to 150.

3. Coating composition according to claim 1,
characterised in that the pigment paste contains 0 to 40 wt.% of water and/or 0 to 20 wt.% of one or more organic solvents, wherein the weight percentages in each case relate to the entire pigment paste.

4. Coating composition according to one of the preceding claims, characterised in that component A) contains one or more cationic binders, component B) contains one or more cationic and/or neutral crosslinking agents and component C) contains one or more anionic binders.

5. Coating composition according to one of claims 1 to 3, characterised in that component A) contains one or more anionic binders, component B) contains one or more anionic and/or neutral crosslinking agents and component C) contains one or more cationic binders.

6. Coating composition according to one of claims 1 to 4, characterised in that component A) contains one or more cationic binders, which comprise resins prepared from ethylenically unsaturated monomers, poly(meth)acrylate resins, polyester resins and/or polyesterurethane resins, in each case having acid-neutralisable basic groups, calculated as an amine value of 20 to 200, having a number average molecular weight (Mn) of 500 to 50000 and a hydroxyl value of 0 to 450.

7. Coating composition according to one of claims 1 to 3 and 5, characterised in that component A) contains one or more anionic binders, which comprise (meth)acrylic ester polymers, polyesters, polyethers, polyurethanes and/or epoxy reins, in each case having a number average molecular weight (Mn) of 2000 to 200000, anionic groups corresponding to an acid value of 5 to 80 and an OH value of 60 to 250.

8. Coating composition according to one of claims 1 to 4 and 6, characterised in that component C) contains one or more binders based on polyesters, polyurethanes or reaction products of epoxy resins, which each have a number average molecular weight (Mn) of 2000 to 30000 and contain anionic groups corresponding to an acid value of 10 to 90.

9. Coating composition according to one of claims 1 to 3, 5 and 7, characterised in that component C) contains one or more binders based on polyesters, polyurethanes or reaction products of epoxy resins, each having a number average molecular weight (Mn) of 2000 to 30000 and cationic groups, calculated as an amine value of 10 to 150.

10. Process for the production of single layer or multilayer coatings, characterised in that an optionally coated substrate is coated with a coat prepared from a coating composition according to one of claims 1 to 9 and optionally one or more further coats are applied.

11. Process according to claim 10, characterised in that it is performed to lacquer coat motor vehicles or the components thereof.

12. Use of the coating compositions according to one of claims 1 to 9 for the production of single layer or multilayer coatings.

13. Use of the coating composition according to one of claims 1 to 9 as primers, surfacer layers, base lacquers, topcoat lacquers or clear lacquers, in particular in the automotive sector.

14. Use of one of the coating compositions according to one of claims 1 to 9 for the production of coatings by application by means of spraying, curtain coating, brushing or flow coating.

15. Process for the production of a coating composition according to one of claims 1 to 9, characterised in that the components defined in claims 1 to 9 are mixed together.

## Revendications

1. Matériau de revêtement, contenant un mélange aqueux constitué de
I. 99 - 70% en poids d'un mélange de
A) 50 - 100% en poids d'un ou de plusieurs liants, qui portent au moins partiellement des groupes ioniques,
B) 0 - 50% en poids d'un ou de plusieurs agents de réticulation pour le liant A), qui peuvent porter au moins partiellement des groupes ioniques, dans lesquels les groupes ioniques présents portent la même charge que celle du composant A) et
II. 1 - 30% en poids d'un ou de plusieurs liants (composant C) sous la forme d'une dispersion aqueuse, dans lesquels les liants sont miscibles avec les liants du composant A) aussi bien à la température de stockage qu'à la température de durcissement des matériaux de revêtement et portent des groupes ioniques, dont la charge est opposée à la charge des groupes ioniques du composant I), et dans lesquels au moins une partie des groupes ioniques est neutralisée et dans lesquels les % en poids se rapportent respectivement au poids de résine solide et dans lesquels les parties des composants I) et II) sont adaptées entre elles de sorte que 0,5 à 70% de la quantité de charges des groupes ioniques de I) soient neutralisés par les charges des groupes ioniques de II), et
III. d'additifs des peintures et/ou de pigments et/ou de charges de remplissage usuels, et éventuellement d'un ou de plusieurs solvants usuels des peintures,
dans lequel on ajoute le composant C) sous la forme d'une pâte pigmentaire, qui contient 5 à 65% en poids d'un ou de plusieurs pigments et/ou charges en même temps que 95 à 35% en poids de la résine du composant C).

2. Matériau de revêtement selon la revendication 1, caractérisé en ce que le composant I) porte des groupes ioniques correspondant à un indice d'amine de 20 à 200 ou correspondant à un indice d'adde de 5 à 80 et les liants du composant C, des groupes ioniques correspondant à un indice d'acide de 10 à 90 ou à un indice d'amine de 10 à 150.

3. Matériau de revêtement selon la revendication 1, caractérisé en ce que la pâte pigmentaire contient 0 à 40% en poids d'eau et/ou 0 à 20% en poids d'un ou de plusieurs solvants organiques, dans lequel les % en poids se rapportent respectivement à l'ensemble de la pâte pigmentaire.

4. Matériau de revêtement selon l'une des revendications précédentes, caractérisé en ce que le composant A) contient un ou plusieurs liants cationiques, le composant B) un ou plusieurs agents de réticulation cationiques et/ou neutres et le composant C) un ou plusieurs liants anioniques.

5. Matériau de revêtement selon l'une ou plusieurs des revendications 1 à 3, caractérisé en ce que le composant A) contient un ou plusieurs liants anioniques, le composant B) un ou plusieurs agents de réticulation anioniques et/ou neutres et le composant C) un ou plusieurs liants cationiques.

6. Matériau de revêtement selon l'une ou plusieurs des revendications 1 à 4, caractérisé en ce que le composant A) contient un ou plusieurs liants cationiques, dans lesquels il s'agit de résines à base de monomères éthyléniquement insaturés, de résines de poly(méth)-acrylate, de résines polyester et/ou de résines polyester-uréthanne, avec respectivement des groupes basiques neutralisables par un acide, calculés avec un indice d'amine de 20 à 200, avec une masse molaire moyenne en nombre (Mn) de 500 à 50000 et un indice d'hydroxyle de 0 à 450.

7. Matériau de revêtement selon l'une ou plusieurs des revendications 1 à 3 et 5, caractérisé en ce que le composant A) contient un ou plusieurs liants anioniques, dans lesquels il s'agit de polymérisats d'esters (méth)acryliques, de polyesters, de polyéthers, de polyuréthannes et/ou de résines époxyde, avec respectivement une masse molaire moyenne en nombre (Mn) de 2000 à 200000, des groupes anioniques correspondant à un indice d'acide de 5 à 80 et un indice d'hydroxyle de 60 à 250.

8. Matériau de revêtement selon l'une ou plusieurs des revendications 1 à 4 et 6, caractérisé en ce que le composant C) contient un ou plusieurs liants à base de polyesters, de polyuréthannes ou de produits de réaction de résines époxyde, qui présentent respectivement une masse molaire moyenne en nombre (Mn) de 2000 à 30000 et des groupes anioniques correspondant à un indice d'adde de 10 à 90.

9. Matériau de revêtement selon l'une ou plusieurs des revendications 1 à 3, 5 et 7, caractérisé en ce que le composant C) contient un ou plusieurs liants à base de polyesters, de polyuréthannes ou de produits de réaction de résines époxyde, respectivement avec une masse molaire moyenne en nombre (Mn) de 2000 à 30000 et des groupes cationiques, calculés à un indice d'amine de 10 à 150.

10. Procédé de revêtement monocouche ou multicouches, caractérisé en ce qu'on recouvre un substrat, éventuellement enduit, d'une couche d'un revêtement selon l'une des revendications 1 à 9 et en ce qu'on dépose éventuellement une ou plusieurs autres couches.

11. Procédé selon la revendication 10, caractérisé en ce qu'il est utilisé pour la peinture de véhicules à moteur ou de leurs pièces.

12. Utilisation des matériaux de revêtement selon l'une ou plusieurs des revendications 1 à 9 pour la préparation de revêtements monocouche ou multicouches.

13. Utilisation des matériaux de revêtement selon l'une ou plusieurs des revendications 1 à 9 comme couches de base, couches de filler, laques de base, laques de couverture ou vernis incolores, en particulier dans le secteur des véhicules à moteur.

14. Utilisation d'un des matériaux de revêtement selon l'une des revendications 1 à 9 pour la fabrication de revêtements par enduction par aspersion, coulée, peinture ou trempé.

15. Procédé de fabrication d'un matériau de revêtement selon l'une des revendications 1 à 9, caractérisé en ce qu'on mélange entre eux les composants définis dans les revendications 1 à 9.
